(19) Europäisches Patentamt

European Patent Office

Office européen des brevets

(11) EP 0 437 002 B1

(12) EUROPEAN PATENT SPECIFICATION

(45) Date of publication and mention
of the grant of the patent:
**23.09.1998 Bulletin 1998/39**

(51) Int Cl.6: **H04N 1/41**

(21) Application number: **90203518.7**

(22) Date of filing: **28.12.1990**

(54) **Region and texture coding**

Bereichs- und Textkodierung

Codage de zones et de textures

(84) Designated Contracting States:
**DE FR GB**

(30) Priority: **12.01.1990 GB 9000721**
**23.03.1990 GB 9006498**
**30.11.1990 GB 9026137**

(43) Date of publication of application:
**17.07.1991 Bulletin 1991/29**

(73) Proprietors:
• **PHILIPS ELECTRONICS UK LIMITED**
**Croydon CR9 3QR (GB)**
Designated Contracting States:
**GB**
• **Koninklijke Philips Electronics N.V.**
**5621 BA Eindhoven (NL)**
Designated Contracting States:
**DE FR**

(72) Inventors:
• **Moran, David**
**Surrey, RH1 5HA (GB)**
• **Morris, Octavius John**
**Surrey, RH1 5HA (GB)**

(74) Representative: **Andrews, Arthur Stanley et al**
**Philips Electronics UK Limited**
**Patents and Trade Marks Department**
**Cross Oak Lane**
**Redhill, Surrey RH1 5HA (GB)**

(56) References cited:
• **3RD INTELLECTUAL CONFERENCE ON IMAGE**
**PROCESSING & ITS APPLICATIONS (IPA 89)**
**July 1989, WARWICK (UK) pages 536 - 540; O.**
**MORAN AND O.J. MORRIS: "Region and Texture**
**Coding of TV Pictures"**
• **ELECTRONICS LETTERS vol. 24, no. 22, 27**
**October 1988, STEVENAGE, HERTS., GB pages**
**1380 - 1381; Y.S.LIM ET AL.: 'Image**
**Segmentation and Approximation through**
**Surface Type Labelling and Region Merging'**

## Description

The invention relates to a method of processing a picture signal for conveyance by means of a transmission path or storage medium, said method comprising the steps of:-

i) producing a picture signal which corresponds to a picture,
ii) subjecting said picture signal to a segmentation algorithm to produce a region signal which identifies edges and closed regions in said picture,
iii) producing a modified region signal by post-processing the region signal produced in step (ii), and
iv) producing a texture signal which corresponds to the difference between the picture signal produced in step (i) and the modified region signal produced in step (iii).

The invention also relates to a method of recovering a picture signal when received in such two component form and apparatus for performing either of the two methods.

Decomposing a picture signal into two components using features identified in the original picture is well known; see for instance "Second-Generation Image-Coding Techniques" by M. Kunt, A. Ikonomopoulos and M. Kocher, Proceedings of the IEEE, volume 73, No. 4, April 1985, pages 549 to 574. The two components then can be coded separately. The reasoning behind this approach is that by finding and encoding perceptually important features of the picture they will be preserved and that by the separation of the picture signal into two components of very different character it is possible to design efficient codes for each of them. Image bandwidth compression aims to reduce the amount of information that must be transmitted while simultaneously preserving the quality of the decoded picture. Region coding schemes so far proposed with good compression tend to be complex. That disclosed in "Region and texture coding of TV pictures" by D. Moran and O.J. Morris, 3rd Intellectual Conference on Image Processing and its Applications (IPA 89), pages 536-540, Warwick, U.K., July 1989 includes post-processing of the region signal prior to the production of the texture signal at the encoder end and similar post-processing of the region signal at the decoder end prior to the reproduction of 5 the picture signal from the recovered region and texture signals. The post-processing involves the adaptive smoothing of false contour edges in the region signal and to achieve this the edges need to be examined to determine whether the contour edge is false or not. In the absence of such determination all edges would be similarly smoothed. Thus such post processing requires false contour detection which adds to its complexity whilst it only operates across a limited number of pixels (one) on either side of a boundary.

It is an object of the present invention to provide a method and apparatus for region and texture image coding which is less complex than that above proposed.

The invention provides a method of processing a picture signal for conveyance by means of a transmission path or storage medium, as set forth in Claim 1.

The invention also provides a method of recovering a picture signal received in the form of a first component related to the regions of said picture signal and a second component related to the texture of said picture signal, said method being as set forth in Claim 2.

The above methods have the advantage that the post-processing may be applied to every boundary as the use of a smooth function can take into account the step edge height between adjacent regions and the width of the region. The post-processing is therefore less complex to perform to that previously described.

The smooth function for the methods may be a polynomial providing the approximation

$$f(x) = ax^3 + bx^2 - cx + d.$$

where a, b, c and d are coefficients chosen to provide a spline function f(x) and x is the distance from its assoicated step edge.

The invention further provides apparatus for processing a picture signal for conveyance by means of a transmission path or storage medium, said apparatus being as set forth in Claim 4.

The invention additionally provides apparatus for recovering a picture signal received in the form of a first component related to the regions of said picture signal and a second component related to the texture of said picture signal, said apparatus being as set forth in Claim 5.

The smooth function produced by said function producing means may be a polynomial providing the approximation

$$f(x) = ax^3 + bx^2 + cx + d.$$

where a, b, c and d are coefficients chosen to provide a spline function f(x) and x is the distance from its associated step edge.

The above and other features of the invention will now be described, by way of example, with reference to the accompanying drawings, in which:

Figure 1 is a block diagram of apparatus for use with the present application,
Figure 2 shows two examples of contours,
Figure 3 shows examples of region interpolation,
Figure 4 shows a smooth function added to a contour, and
Figure 5 is an enlargement of part of Figure 4.

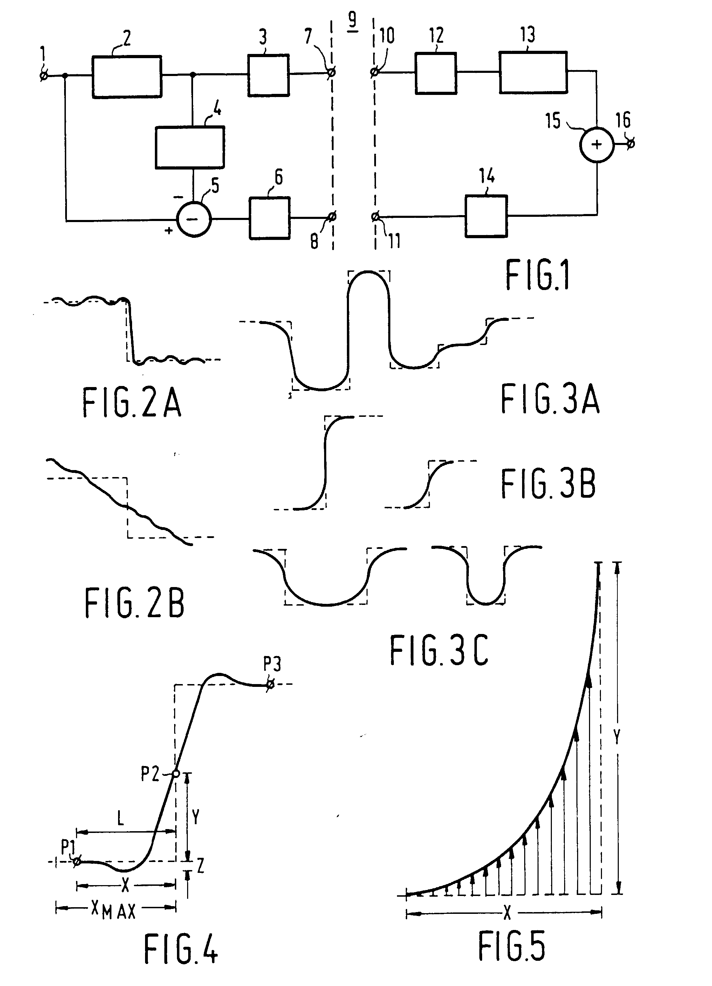

In the block diagram of Figure 1 the reference 1 indicates a terminal for receiving a digitised luminance signal Y which is applied to the input of a segmentation device 2 in which the luminance signal is subjected to a segmentation algorithm which establishes regions of a similar intensity in the image represented by the luminance signal Y and the contours surrounding the regions. The resulting segmented luminance signal (the region image signal) is applied to a region image encoder 3 which encodes the information relating to these contours and the intensities of the regions as identified by the segmentation device 2.

The region image signal from the segmentation device 2 is also applied to a region post-processing arrangement 4 by means of which the region representation is improved by disguising false contours which generate stepped edges in the region signal. By way of example Figure 2A illustrates a real contour in the region image signal whilst Figure 2B illustrates a false contour. In these figures the segmented image is represented by the broken line whilst the original image is represented by the continuous line. The arrangement 4 replaces the intensity values in the region image signal about such stepped edges by a smooth function, the manner in which this is achieved being described in detail hereinafter. The modified region image signal produced by arrangement 4 and the original luminance signal from terminal 1 are applied to respective inputs of a subtractor circuit 5 such that the modified region image signal is subtracted from the luminance signal to produce at its output a luminance texture image signal. As a result of the post-processing of the region image signal, the resulting texture image signal contains a reduced amount of information compared with what it would have contained in the absence of the post-processing. This texture image signal is applied to a texture image encoder 6 whose bit rate required to code the texture image signal can be lower than if the region image signal had not been post-processed.

The encoded outputs from the region image coder 3 and the texture image coder 6 are applied to respective output terminals 7 and 8 for application to a data channel in the form of a transmission path or a storage medium diagrammatically indicated by the parallel broken lines 9, with or without further processing as necessary. The part of Figure 1 described so far forms the transmission encoder. Two further terminals 10 and 11 are also shown connected to the data channel and these form the inputs for the receiving decoder. Terminal 10 receives the encoded region image signal which is applied to a region image decoder 12 to reproduce the region image signal. This signal is applied to a further region post-processing arrangement 13 whose mode of operation and purpose is the same as that for the region post-processing arrangement 4 in the transmission encoder to produce an improved region representation corresponding to that produced by arrangement 4. The other input at terminal 11 is the encoded texture image signal which is applied to a texture image decoder 14 to reproduce the texture image signal. The modified region image signal produced by arrangement 13 and the texture image signal produced by decoder 14 are applied to respective inputs of an adder circuit 15 to produce the reconstructed luminance signal Y at an output terminal 16.

As stated above the purpose of the region post-processing arrangement 4 in the transmission encoder, and also for that of the corresponding arrangement 14 in the receiving decoder, is to improve the region representation. Assumptions about where the deficiences lie in the segmented image can be employed to estimate where compensation should be used to improve the approximation to the original image, without sending extra information. No overhead is required as the properties of the segmented image can be used to determine the parameters of this compensation. A smooth function can simply replace the intensity values in the region signal after segmentation at the step edges. By fitting a smooth function to the segmented image, using the post-processing arrangements, it is possible to improve the match between the segmented image and the original image. It is necessary to decide what properties the function should have and what parameters are available to control them.

In the accompanying Figure 3A a cross-section of a segmented image containing a number of contour steps is shown. The curved line represents how a smooth function can be used to improve the representation of the original image. How such a curve can be reproduced from the information in the segmented image can now be defined. It has been found that high contrast edges must remain relatively unchanged in both position and magnitude. This implies that the gradient of the function has to be dependent on the step size between regions to retain sharp transitions, as shown in the accompanying Figure 3B in which on the left shows a high contrast region boundary whilst on the right shows a low contrast region boundary. Low contrast region boundaries should however have a larger degree of edge spreading (i.e. a shallow gradient) than for high contrast boundaries giving a reduction in the effect of false contours by changing the decomposition. By smoothing out the edge the region boundary achieves a closer match to the gradually changing intensity. The sharpness of the edges are reduced changing the decomposition resulting in a reduction in the high frequency content in the texture signal. Thus as the step height increases the edge spreading should be reduced and vice versa. The function should also be controlled by the region width as shown in the accompanying Figure 3C which shows a wide region on the left and a narrow region on the right. Narrow regions should have less edge spreading to stop the plateau areas from being severely eroded. If narrow regions are allowed to have a large degree of edge spreading the mean intensity value of the segment is likely to change substantially and more information would be transferred into the texture signal. However, bigger regions can suffer much larger distortion to produce a closer match to the original. The change in mean intensity for large regions is usually very small as the majority of pixels remain unchanged.

Now that the properties of the function have been defined a suitable function can be selected. Cubic splines (a third degree polynomial), in the form of the following equation 1, were chosen to provide the approximation

$$f(x) = ax^3 + bx^2 + cx + d \qquad (1)$$

where a, b, c and d are coefficients chosen to provide a spline function f(x) which is adapted to the properties of the region signal and x is the distance from its associated step edge. They were considered to be suitable for this application as they have the following properties:-

i) fixed end points that the curve must pass through,
ii) definable end point gradients, and
iii) easily computed.

As shown in the accompanying Figure 4, one end of the spline is fixed at the mid-point P2 of the step edge at a height Y which corresponds to half the step height and the other normally at the mid-point P1 of the plateau at a distance X which corresponds to half the step width. This allows the whole curve to be defined using just these two end points. These two points can be readily calculated from the segmented image. The boundaries of regions (i.e. step edges) can be identified by looking for transitions in the intensity values and the plateau mid-points occur halfway between two step edges in a horizontal or vertical direction.

A spline can overshoot or undershoot the plateau height by Z so the function is constrained by controlling the plateau end point. This over/undershooting creates intensity humps/hollows in the segmented image which after decomposition makes the texture signal more difficult to encode and hence causes artefacts in the reconstructed image. By calculating the maxima/minima of the curve the maximum distance Xmax the plateau end point P1 should be from the edge can be controlled to fix the maximum over/undershoot to a percentage of the total edge height (e.g. 5%). The equation of the spline is given in the following equation 2. The turning point of the curve, is calculated from this by differentiating with respect to L and equating to zero to give the following equation 3. One of the solutions of this equation gives Xmax, the maximum distance the curve should start from the step edge to stop the percentage overshoot being exceeded.

$$f(L) = aL^3 + bL^2 + cL + d \qquad (2)$$

where:-

$a = Y(X - 2S)/SX^3$
$b = Y(3S - X)/SX^2$
$c = 0$
$d = 0$.

$$0 = SX^3/L^2M\text{-}X^2 + (3S + L)X\text{-}2SL \qquad (3)$$

where:-

$L = 2X(X - 3S)/3(X-2S)$

and

L is the distance from the plateau end point,
X is half the plateau width,
Y is half the step edge height,
M controls the percentage overshoot of the spline, and
S controls the gradient of the spline at the step edge end point.

A zero gradient is defined for the plateau end point P1 so that each spline is continuous with the next. The edge end point P2 has a gradient which is a function of the edge step height. Again the gradient on either side of the edge mid-point is the same so that the curve remains continuous. Pixels with associated boundary step heights greater than a certain value (e.g. 120) are not processed to avoid the spreading of high contrast edges.

The splines are dependent upon two parameters, the region width and step edge height. The function can therefore be defined as a look-up table to allow simple hardware implementation. By way of example, such a table may have a maximum size of 13.2 bytes when an eight bit spline value implementation (the value to be added to the pixel intensities) with the constraints (e.g. overshoot control) detailed above are used. The table should also contain all the possible combinations, for each edge step height and plateau width (restricted to control overshooting) of values that replace the step edge of the segmented image to improve the match to the original image.

The maximum plateau width (Xmax) allowed before the spline overshoots by more than the specified percentage is calculated so that the plateau end point P1 can be constrained. If Xmax is less than X the next integer value below Xmax is used as the distance of the plateau end point from the step edge. Initially the splines are fitted along the x-axis of the picture but all horizontal boundaries are missed causing artefacts. This is corrected for by processing the frame in the y-axis and averaging the two together. It is also possible to create a two dimensional system whereby the two operations can occur simultaneously.

The results achieved by this processing are good, with natural looking images being produced. Subjective image quality improves and most false contours are disguised. The information content of the texture is visibly reduced.

Spline fitting gives significant improvements with no overhead. The spline fitting must be repeated at the decoder in the region post-processing arrangement 13. Such post-processing is easy to implement in hardware requiring a relatively small look-up table and simple parameter gathering logic. This is advantageous over techniques which attempt to fit surfaces (i.e. tilted planes and polynomial surfaces) and those which use filtering operators.

The values read out from the look-up table replace the step to edge of the region image signal as shown in Figure 5 which shows an enlarged portion of Figure 4 where the fitted spline has no overshoot. In Figure 5 the values added at the individual pixel positions are indicated by vertical arrows.

In the above description reference is made only to the processing of a luminance signal Y. However the invention is equally suitable for processing chrominance components U and V as well as the luminance signal Y. This may be done by separate parallel processing of the chrominance components U and V or by not subjecting these components to segmentation but to use the results of the segmentation algorithm applied to the luminance signal Y to define regions in these chrominance components which in turn are used to produce two chrominance texture signals.

**Claims**

1. A method of processing a picture signal for conveyance by means of a transmission path or storage medium, said method comprising the steps of: -

    i) producing a picture signal which corresponds to a picture,
    ii) subjecting said picture, signal to a segmentation algorithm to produce a region signal which identifies edges and closed regions in said picture,
    iii) producing a modified region signal by post-processing the region signal produced in step (ii), and
    iv) producing a texture signal which corresponds to the difference between the picture signal produced in step (i) and the modified region signal produced in step, (iii),

    characterised in that the production of said modified region signal comprises the steps of:-

    v) producing a smooth function whose gradient is dependent on the step edge size between adjacent regions and/or the width of the region, and
    vi) replacing the step edges of said region signal by the function produced in step (v).

2. A method of recovering a picture signal received in the form of a first component related to the regions of said picture signal and a second component related to the texture of said picture signal, said method comprising the steps of:-

    i) receiving said region related component and producing a region signal therefrom,
    ii) receiving said texture related component and producing a texture signal therefrom,
    iii) producing a modified region signal by post-processing the region signal recovered in step (i), and
    iv) producing a recovered picture signal by combining said modified region signal produced in step (iii) and said recovered texture signal produced in step (ii),

    characterised in that the production of said modified region signal comprises the steps of: -

    v) producing a smooth function whose gradient is dependent on the step edge size between adjacent regions and/or the width of the region, and
    vi) replacing the step edges of said region signal by the function produced in step (v).

3. A method as claimed in Claim 1 or Claim 2, characterised in that the said smooth function is a polynomial providing the approximation

    $$f(x) = ax^3 + bx^2 + cx + d$$

    where a, b, c and d are coefficients chosen to provide a spline function f(x) and x is the distance from its associated step edge.

4. Apparatus for processing a picture signal for conveyance by means of a transmission path or storage medium, said apparatus comprising means for producing a picture signal which corresponds to a picture, means for subjecting said picture signal to a segmentation algorithm to produce a region signal which identifies edges and closed regions in said picture, means for producing a modified region signal by post-processing the region signal, and means for producing a texture signal which corresponds to the difference between the picture signal and the said modified region signal, characterised in that said means for producing said modified region signal comprises means for producing a smooth function whose gradient is dependent on the step edge size between adjacent regions and/or the width of the region and means for replacing step edges of said region signal by said smooth function.

5. Apparatus for recovering a picture signal received in the form of a first component related to the regions of said picture signal and a second component related to the texture of said picture signal, said apparatus comprising means for receiving said region related component and producing a region signal therefrom, means for receiving said texture related component and producing a texture signal therefrom, means for producing a modified region signal by post-processing the region signal, and means for producing a recovered picture signal by combining said modified region signal and said recovered texture signal, characterised in that said means for producing said modified region signal comprises means for producing a smooth function whose gradient is dependent upon the step edge size between adjacent regions and/or the width of the region and means for replacing step edges of said region signal by said smooth function.

6. Apparatus as claimed in Claim 4 or Claim 5, characterised in that the said smooth function produced by said function producing means is a polynomial providing the approximation

$$f(x) = ax^3 + bx^2 + cx + d$$

where a, b, c and d are coefficients chosen to provide a spline function f(x) and x is the distance from its associated step edge.

**Patentansprüche**

1. Verfahren zum Verarbeiten eines Bildsignals zur Beförderung über eine Übertragungsstrecke oder mit Hilfe eines Speichermittels, wobei dieses Verfahren die nachfolgenden Verfahrensschritte umfaßt:

   i) das Erzeugen eines Bildsignals, das einem Bild entspricht,

   ii) das Anwenden eines Segmentierungsalgorithmus auf das genannte Bildsignal zum Erzeugen eines Bereichssignals, das Ränder und geschlossene Gebiete in dem genannten Bild erkennt,

   iii) das Erzeugen eines modifizierten Bereichssignals durch Nachbearbeitung des in dem Verfahrensschritt (ii) erzeugten Bereichssignals, und

   iv) das Erzeugen eines Textursignals, das der Differenz zwischen dem in dem Verfahrensschritt (i) erzeugten Bildsignal und dem in dem Verfahrensschritt (iii) erzeugten modifizierten Bereichssignal entspricht,

dadurch gekennzeichnet, daß die Erzeugung des genannten Bereichssignals die nachfolgenden Verfahrensschritte umfaßt:

   v) das Erzeugen einer Glättungsfunktion, dessen Gradient abhängig ist von der Stufenrandgröße zwischen benachbarten Bereichen und/oder von der Größe des bereichs, und

   vi) das Ersetzen der Stufenränder des genannten Bereichssignals durch die in dem Verfahrensschritt (v) erzeugte Funktion.

2. Verfahren zum Wiederherstellen eines Bildsignals, empfangen in Form einer ersten Komponente, die sich auf die Bereiche des genannten Bildsignals bezieht und einer zweiten Komponente, die sich auf die Textur des genannte Bildsignals bezieht, wobei dieses Verfahren die nachfolgenden Verfahrensschritte umfaßt:

   i) das Empfangen der genannten bereichsbezogenen Komponente und das Erzeugen eines Bereichssignals daraus,

   ii) das Empfangen der genannten texturbezogenen Komponente und das Erzeugen eines Textursignals daraus,

   iii) das Erzeugen eines modifizierten Bereichssignals durch Naschbearbeitung des in dem verfahrfensschritt (i) wiederhergestellten Bereichssignals, und

   iv) das Erzeugen eines wiederhergestellten Bildsignals durch Kombination des genannten in dem Verfahrensschritt (iii) erzeugten modifizierten Bereichssignals und des genannten in dem Verfahrensschritt (ii) wiederhergestellten Textursignals,

dadurch gekennzeichnet, daß die Erzeugung des genannten modifizierten Bereichssignals die nachfolgenden Verfahrensschritte umfaßt:

   v) das Erzeugen einer Glättungsfunktion, deren Gradient abhängig ist von der Stufenrandgröße zwischen benachbarten Bereichen und/oder von der Größe des Bereiches, und

vi) das Ersetzen der Stufenränder des genannten Bereichssignals durch die in dem Verfahrensschritt (v) erzeugte Funktion.

3. Verfahren nach Anspruch 1 oder 2, dadurch gekennzeichnet, daß die genannte Glättungsfunktion ein Polynom ist, daß die nachfolgende Annäherung schafft:

$$f(x) = ax^3 + bx^2 + cx + d$$

wobei a, b, c und d Koeffizienten sind, die gewählt worden sind zum Schaffen einer Spline-Funktion f (x) und wobei x der Abstand von dem zugeordneten Sufenrand ist.

4. Schaltungsanordnung zum Verarbeiten eines Bildsignals zum Befördern desselben über eine Übertragungsstrecke oder mit Hilfe eines Speichermittels, wobei diese Schaltungsanordnung Mittel aufweist zum Erzeugen eines Bildsignals, das einem Bild entspricht, Mittel um das genannte Bildsignal einem Segmentierungsalgorithmus auszusetzen zum Erzeugen eines Bereichssignals, das Ränder und geschlossene Bereiche in dem genannten Bild erkennt, Mittel zum Erzeugen eines modifizierten Bereichssignals durch Nachbearbeitung des Bereichssignals, und Mittel zum Erzeugen eines Textursignals, das der Differenz zwischen dem Bildsignals und dem genannten modifizierten Bereichssignal entspricht, dadurch gekennzeichnet, daß die genannten Mittel zum Erzeugen des genannten modifizierten Bereichssignals Mittel aufweisen zum Erzeugen einer Glättungsfunktion, deren Gradient abhängig ist von der Stufenrandgröße zwischen benachbarten Bereichen und/oder von der Größe des Bereichs und Mittel zum Ersetzen der Stufenränder des genannten Bereichssignals durch die genannte Glättungsfunktion.

5. Schaltungsanordnung zum Wiederherstellen eines Bildsignals, das empfangen worden ist in Form einer ersten Komponente, die sich auf die Bereiche des genannten Bildsignals bezieht und einer zweiten Komponente, die sich auf die textur des genannten Bildsignals bezieht, wobei die genannte Schaltungsanordnung Mittel aufweist zum Empfangen der genannten bereichsbezogenen Komponente und zum Erzeugen eines Bereichssignals daraus, Mittel zum Empfangen der genannten texturbezogenen Komponente und zum Erzeugen eines Textursignals daraus, Mittel zum Erzeugen eines modifizierten Bereichssignals durch nachbearbeitung des Bereichssignals und Mittel zum Erzeugen eines wiederhergestellten Bildsignals durch Kombination des genannten modifizierten Bereichssignals und des genannten wiederhergestellten Textursignals, dadurch gekennzeichnet, daß die genannten Mittel zum Erzeugen des genannten modifizierten Bereichssignals Mittel aufweisen zum Erzeugen einer Glättungsfunktion, deren Gradient abhängig ist von der Stufenrandgröße zwischen benachbarten Bereichen und/oder von der Größe des Bereichs und Mittel zum Ersetzen der Stufenränder des genannten Bereichssignals durch die genannte Glättungsfunktion.

6. Schaltungsanordnung nach Anspruch 4 oder 5, dadurch gekennzeichnet, daß die genannte von den genannten Funktionserzeugungsmittel erzeugte Glättungsfunktion ein Polynom ist, das die nachfolgende Annäherung schafft:

$$f(x) = ax^3 + bx^2 + cx + d$$

wobei a, b, c und d Koeffizienten sind, die gewählt worden sind zum Schaffen einer Spline-Funktion f (x) und wobei x der Abstand von dem zugeordneten Sufenrand ist.

**Revendications**

1. Procédé pour le traitement d'un signal d'image à acheminer au moyen d'un trajet de transmission ou d'un support de stockage, ledit procédé comprenant les étapes suivantes :

i) produire un signal d'image qui correspond à une image;
ii) soumettre ledit signal d'image à un algorithme de segmentation pour produire un signal de zone qui identifie des bords et des zones fermées dans ladite image;
iii) produire un signal de zone modifié par posttraitement du signal de zone produit au cours de l'étape (ii), et
iv) produire un signal de texture qui correspond à la différence entre le signal d'image produit à l'étape (i) et le signal de zone modifié produit à l'étape (iii), caractérisé en ce que la production dudit signal de zone modifié comprend les étapes suivantes :
v) produire une fonction lisser dont le gradient dépend de la taille du bord de palier entre des zones adjacentes et/ou de la largeur de la zone, et
vi) remplacer les bords de palier dudit signal de zone par la fonction produite au cours de l'étape (v).

2. Procédé de récupération d'un signal d'image reçu sous la forme d'une première composante relative aux zones dudit signal d'image et d'une deuxième composante relative à la texture dudit signal d'image, ledit procédé comprenant les étapes suivantes :

i) recevoir ladite composante relative à la zone et à produire à partir de celle-ci un signal de zone;
ii) recevoir ladite composante relative à la texture et produire à partir de celle-ci un signal de texture;
iii) produire un signal de zone modifié par posttraitement du signal de zone récupéré au cours de l'étape (i), et
iv) produire un signal de zone récupéré par combinaison dudit signal de zone modifié produit au cours de l'étape (iii) et dudit signal de texture récupéré produit au cours de l'étape (ii),

caractérisé en ce que la production dudit signal de zone modifié comprend les étapes suivantes :

v) produire une fonction lisser dont le gradient dépend de la taille du bord de palier entre des zones adjacentes et/ou de la largeur de la zone, et
vi) remplacer les bords de palier dudit signal de zone par la fonction produite au cours de l'étape (v).

**3.** Procédé suivant la revendication 1 ou la revendication 2, caractérisé en ce que ladite fonction lisser est un polynôme fournissant l'approximation

$$f(x) = ax^3 + bx^2 + cx + d$$

où a, b, c et d sont des coefficients choisis pour procurer une fonction pistolet f(x) et, x est la distance à partir de son bord de palier associé.

**4.** Appareil pour le traitement d'un signal d'image à acheminer au moyen d'un trajet de transmission ou d'un support de stockage, ledit appareil comprenant des moyens pour produire un signal d'image qui correspond à une image, des moyens pour soumettre ledit signal d'image à un algorithme de segmentation pour produire un signal de zone qui identifie les bords et les zones fermées de ladite image, des moyens pour produire un signal de zone modifié par post-traitement du signal de zone, et des moyens pour produire un signal de texture qui correspond à la différence entre le signal d'image et ledit signal de zone modifié, caractérisé en ce que lesdits moyens pour produire ledit signal de zone modifié comprennent des moyens pour produire une fonction lisser dont le gradient dépend de la taille du bord de palier entre des zones adjacentes et/ou de la largeur de la zone et des moyens pour remplacer les bords de palier dudit signal de zone par ladite fonction lisser.

**5.** Appareil pour récupérer un signal d'image reçu sous la forme d'une première composante relative aux zones dudit signal d'image et d'une deuxième composante relative à la texture dudit signal d'image, ledit appareil comprenant des moyens pour recevoir ladite composante relative à la zone et pour produire à partir de celle-ci un signal de zone, des moyens pour recevoir ladite composante relative à la texture et pour produire à partir de celle-ci un signal de texture, des moyens pour produire un signal de zone modifié par post-traitement du signal de zone, et des moyens pour produire un signal d'image récupéré en combinant ledit signal de zone modifié et ledit signal de texture récupéré, caractérisé en ce que lesdits moyens pour produire ledit signal de zone modifié comprennent des moyens pour produire une fonction lisser dont le gradient dépend de la taille de bord de palier entre des zones adjacentes et/ou de la largeur de la zone et des moyens pour remplacer les bords de palier dudit signal de zone par ladite fonction lisser.

**6.** Appareil suivant la revendication 4 ou la revendication 5, caractérisé en ce que ladite fonction lisser produite par lesdits moyens de production de fonction est un polynôme fournissant l'approximation

$$f(x) = ax^3 + bx^2 + cx + d$$

où a, b, c et d sont des coefficients choisis pour procurer une fonction pistolet f(x) et x est la distance depuis son bord de palier associé.

FIG.1

FIG.2A

FIG.3A

FIG.2B

FIG.3B

FIG.3C

FIG.4

FIG.5